# EUROPÄISCHE PATENTANMELDUNG

(11) **EP 4 748 481 A1**
(43) Veröffentlichungstag der Anmeldung: **27.05.2026**
(21) Anmeldenummer: 24214992.0
(22) Anmeldetag: 24.11.2024
(51) Int. Cl.: B01D 53/38, B01D 53/14, B01D 53/44, B01D 53/78, C08G 18/02, C08J 11/00

(54) **VERFAHREN ZUR BEHANDLUNG VON ABGAS**

(71) Anmelder: Covestro Deutschland AG, 51373 Leverkusen (DE)
(72) Erfinder: Merkel, Michael, 40223 Düsseldorf (DE); Meuresch, Markus, 50259 Pulheim (DE); Malbertz, Christoph, 52134 Herzogenrath (DE); Schnappat, Hans-Juergen, 51381 Leverkusen (DE)
(74) Vertreter: Levpat

(57) **Zusammenfassung**

Die vorliegende Erfindung betrifft ein Verfahren zur Behandlung von Abgas aus der Herstellung von Isocyanat-Oligomeren, eine Vorrichtung zur Isocyanat-Oligomerisierung sowie die Verwendung einer Waschflüssigkeit zur Vorbehandlung von Abgasen aus einer Isocyanat-Oligomerisierung.

## Beschreibung

Die vorliegende Erfindung betrifft ein Verfahren zur Behandlung von Abgas aus der Herstellung von Isocyanat-Oligomeren, welches Ablagerungen in den Rohrleitungen des Abgassystems und den damit verbundenen Reinigungsaufwand für diese Rohrleitungen verringert. Außerdem betrifft die Erfindung eine Vorrichtung zur Isocyanat-Oligomerisierung sowie die Verwendung einer Waschflüssigkeit zur Vorbehandlung von Abgasen aus einer Isocyanat-Oligomerisierung.

Bei der Herstellung von Isocyanat-Oligomeren fallen Abgase an, die in der Regel organische Verbindungen, insbesondere Isocyanat-Monomere, enthalten und deshalb nicht unbehandelt an die Atmosphäre abgegeben werden können.

Es sind zahlreiche Verfahren allgemein bekannt, mittels derer sich derartige Abgase reinigen lassen. Weit verbreitet sind insbesondere die thermische Verbrennung, die katalytische Verbrennung oder die Adsorption beispielsweise mittels Aktivkohle. Im industriellen Kontext sind diese Verfahren meist in zentralen Einheiten umgesetzt, die verschiedene Abgasströme aus verschiedenen Anlagen und/oder Anlagenteilen behandeln. In der Praxis sind diese Verfahren zur Nachbehandlung von Abgasen aus einer (katalysierten) Isocyanat-Oligomerisierung deshalb mit Problemen behaftet. Mitgeschleppte Isocyanat-Anteile können miteinander reagieren und zu störenden Ablagerungen im Abgassystem führen, was angesichts der langen Wegstrecken, die das Abgas zur zentralen Abgasbehandlung zurücklegen muss, regelmäßig einen erheblichen Reinigungsaufwand bedeutet.

Weitere Verfahren zur Behandlung von Isocyanat-haltigem Abgas beruhen auf der gezielten Hydrolyse der Isocyanate. So wird beispielsweise in DE10120245C1 ein Verfahren beschrieben, bei dem ein mit Isocyanat verunreinigtes Gas durch ein Wasserbad geleitet wird. Nachteilig ist dabei die Bildung von schwer löslichen Polyharnstoffen, die ihrerseits Anlagenteile verstopfen können. Dem Rechnung tragend beschreibt DE2436781A1 das Waschen des Abgases mit Wasser, verdünnter wässrig-alkalischer oder wässrig-mineralsaurer Lösung in Gegenwart von Aktivkohle und oder aktiver Tonerde. Auch wenn es auf diese Weise tatsächlich gelingen sollte, die Polyharnstoffbildung zu unterdrücken, ist die Verwendung von Aktivkohle oder Tonerde mit neuen Nachteilen, insbesondere der Anwesenheit von Feststoffen und deren Handhabung, verbunden.

WO2023088793A1 offenbart ein Verfahren zur Herstellung von Polyisocyanaten enthaltend Iminooxadiazindion-Gruppen. Beispielhaft wird eine Miniplant erwähnt, in der verschiedene Abgase gesammelt und in einer Waschkolonne mit Hexamethlyendiisocyanat-Monomer gewaschen werden, um volatile Bestandteile auszuwaschen. Nachteilig an dieser Vorgehensweise ist jedoch, dass das Abgas erst recht mit Isocyanaten gesättigt wird, was einerseits die weitere Behandlung erschwert und andererseits zu zusätzlichen Ausbeuteverlusten führt.

Gleiches gilt für das in DE10200406739A1 offenbarte Verfahren zur Herstellung von biuretgruppenhaltigen Polyisocyanaten. Die Biuret-Herstellung nimmt eine Sonderrolle ein, da hier Wasser als Reaktand (Biuretisierungsmittel) eingesetzt wird und deshalb ein feuchtes Abgas anfällt. Um die Polyharnstoffbildung im Abgassystem zu verringern, wird das Abgas mit frischem Diisocyanat gewaschen.

Es bestand also weiterhin Bedarf ein einem einfachen Verfahren zur Behandlung von Abgas aus der Herstellung von Isocyanat-Oligomeren, welches die Verfügbarkeit des Abgassystems durch Verringerung des Reinigungsaufwands erhöht.

Überraschend wurde gefunden, dass diese Aufgabe gelöst werden kann durch ein Verfahren zur Behandlung von Abgas aus einer durch einen Katalysator K katalysierten Isocyanat-Oligomerisierung, umfassend die Schritte:
a) Bereitstellen des Abgases
b) Bereitstellen einer Waschflüssigkeit, die ein Katalysatorgift für den Katalysator K oder für ein katalytisch aktives Fragment des Katalysators K enthält oder daraus besteht, in einer Kontaktzone,
c) Vorbehandeln des Abgases aus Schritt a) durch Kontaktieren des Abgases mit der Waschflüssigkeit in der Kontaktzone, um ein vorbehandeltes Abgas zu erhalten, und
d) optional Auffangen und Nachbehandeln des vorbehandelten Abgases aus Schritt c).

Das Wort "ein" ist im Rahmen dieser Erfindung im Zusammenhang mit zählbaren Größen lediglich als unbestimmter Artikel und nur dann als Zahlwort zu verstehen, wenn dies ausdrücklich, etwa durch den Zusatz "genau ein" gesagt wird. Ausdrücke wie "eine Leitung" schließen also die Möglichkeit des Vorhandenseins weiterer Leitungen nicht aus.

Prozentangaben, soweit nicht explizit anders vermerkt, beziehen sich auf Gewichtsprozent, also die Masse eines Bestandteils bezogen auf die Gesamtmasse einer Mischung.

Bevorzugt bedeuten die Ausdrücke "umfassend" oder "enthaltend" erfindungsgemäß "im Wesentlichen bestehend aus" und besonders bevorzugt "bestehend aus".

Vorliegend steht "Polyisocyanat" für ein Isocyanat, welches durch Oligomerisierung aus einem Diisocyanat hergestellt wurde (Isocyanat-Oligomerisierung), wobei wenigstens zwei Diisocyanatmoleküle in das Polyisocyanat eingebaut wurden. Dabei fallen die Polyisocyanate aufgrund der Difunktionalität der Diisocyanate nicht in Form definierter Verbindungen an, sondern stets als Mischung von Oligomeren. Solche Polyisocyanate werden im Folgenden auch als Polyisocyanatzusammensetzung und allgemein häufig auch als Lack-Polyisocyanate bezeichnet. "Polyisocyanat" steht also ausdrücklich nicht für ein Isocyanat, wie es direkt aus der Phosgenierungsreaktion eines Di- oder Polyamins erhalten wird. Solche Isocyanate, die aus der Phosgenierung erhalten werden, werden vorliegend als monomere Isocyanate oder monomere Diisocyanate bezeichnet. Als katalytische Isocyanat-Oligomerisierung wird folglich ein Verfahren bezeichnet, bei der die Oligomerisierung des Diisocyanats unter Zuhilfenahme eines Katalysators durchgeführt wird.

Das Bereitstellen des Abgases in Schritt a) erfolgt im Rahmen einer katalysierten Isocyanat-Oligomerisierung, typischerweise in einem Reaktor. Dabei kann es beispielsweise durch Abspaltung kleiner Moleküle wie Kohlenstoffdioxid, Stickoxid oder Stickstoff zur Bildung eines Abgasstroms kommen. Außerdem kann es durch Temperaturänderungen oder die Zugabe von Reaktanden oder Lösungsmitteln zur Verdrängung von gasförmigen Reaktorinhalten oder zum Ausgasen von in der Reaktionsmischung gelösten Gasen kommen. Bevorzugt erfolgt die Oligomerisierung unter Einleitung von oder Beschleierung mit einem Inertgas. Bei dem Inertgas handelt es sich bevorzugt um Stickstoff oder Argon, besonders bevorzugt um Stickstoff. Vorzugsweise befindet sich im oberen Bereich des Reaktors ein Auslass für das anfallende Abgas von wo aus es durch eine erste Rohrleitung zur Kontaktzone gelangt. Sofern die Oligomerisierung in mehreren parallel angeordneten Reaktoren erfolgt, kann die Rohrleitung zweckmäßig als Sammelleitung ausgeführt werden, das heißt, dass die Abgase verschiedener Reaktoren durch die erste Rohrleitung geführt und in die Kontaktzone geleitet werden.

In einer ersten Ausführungsform des erfindungsgemäßen Verfahrens umfasst die Isocyanat-Oligomerisierung eine Trimerisierung von aliphatischen, cycloaliphatischen oder araliphatischen Isocyanaten. Geeignete Ausgangsisocyanate sind dabei beispielsweise 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,2-, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,5-Bis(isocyanatomethyl)tetrahydrofuran (TEFUDI), 2,5-Diisocyanato-2,5-dideoxy-1,4:3,6-dianhydrosorbitol (ISODI), 2,5-Diisocyanato-2,5-dideoxy-1,4:3,6-dianhydromannitol (MANDI) und 2,5-Diisocyanato-2,5-dideoxy-1,4:3,6-dianhydroiditol (IDDI) oder Gemische aus zwei oder mehr dieser Diisocyanate.

Besonders geeignete Ausgangsisocyanate sind 1,5-Diisocyanatopentan (PDI), 1,6-Diisocyanatohexan (HDI), 1-Isocyanato-3,3,5-trimethyl-5-isocyanatomethylcyclo¬hexan (Isophorondiisocyanat, IPDI), 4,4'-Diisocyanatodicyclohexylmethan, 2,4'-Diisocyanatodicyclohexylmethan, Bis-(isocyanatomethyl)-norbornan, 1,3- und 1,4-Bis(isocyanatomethyl)benzol (XDI) oder Gemische aus zwei oder mehr dieser Diisocyanate.

Ganz besonders geeignete Ausgangsisocyanate sind 1,5-Diisocyanatopentan (PDI), 1,6-Diisocyanatohexan (HDI) und 1-Isocyanato-3,3,5-trimethyl-5-isocyanatomethylcyclohexan (Isophorondiisocyanat, IPDI), am besten geeignete Ausgangsisocyanate sind 1,5-Diisocyanatopentan (PDI) und 1,6-Diisocyanatohexan (HDI).

Als Katalysatoren für die Modifizierung von Isocyanaten haben sich eine Reihe von Verbindungen bewährt, wie beispielsweise in H. J. Laas et al., J. Prakt. Chem. 1994, 336, 185 ff, D. Dieterich Methoden der organischen Chemie (Houben-Weyl), Band E 20 1987, 1741 ff, EP 0649866 A1 (Seite 4, Zeile 7 bis Seite 5, Zeile 15) oder der EP 0896009 A1 (Seite 4, Zeile 17 bis 58) beschrieben.

In einer bevorzugten Ausführungsform, insbesondere wenn es sich bei der Isocyanat-Oligomerisierung um eine Trimerisierung von aliphatischen, cycloaliphatischen oder araliphatischen Isocyanaten handelt, umfasst der Katalysator K eine tetrasubstituierte Ammonium- und/oder eine tetrasubstituierte Phosphoniumverbindung und ein Hydroxid, Carboxylat und/oder Carbonat als Gegenion oder besteht aus einer tetrasubstituierten Ammonium- und/oder einer tetrasubstituierten Phosphoniumverbindung und einem Hydroxid, Carboxylat und/oder Carbonat als Gegenion. Beispielsweise erfolgt die Trimerisierung in Gegenwart von quaternären Ammoniumcarboxylaten, wie z. B. N-(2-Hydroxypropyl)-N,N,N-trimethylammonium-2-ethylhexanoat, N-(2-Hydroxypropyl)-N,N,N-trimethylammonium-2-formiat, N,N,N-Tetramethylammoniumoctoat, quaternären Ammoniumhydroxiden, wie z. B. Tetramethyl-, Tetraethyl-, Trimethylstearyl- und Dimethylethylcyclohexyl-ammoniumhydroxid, N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-(2-hydroxybutyl)-ammoniumhydroxid, N,N-Dimethyl-n-dodecyl-N-(2-hydroxyethyl)-ammoniumhydroxid, N-(2-Hydroxyethyl)-N,N-dimethyl-N-(2,2'-dihydroxymethylbutyl)-ammoniumhydroxid, N-Methyl-2-hydroxyethyl-morpholiniumhydroxid, N-Methyl-N-(2-hydroxypropyl)-pyrrolidiniumhydroxid, N-Dodecyl-tris-N-(2-hydroxyethyl)-ammoniumhydroxid, Tetra-(2-hydroxyethyl)-ammoniumhydroxid, N,N,N-Trimethyl-N-benzylammoniumhydroxid, oder quaternären Ammonium- und Phosphoniumhydrogenpolyfluoriden, wie z. B. Tetrabutylphosphoniumhydrogendifluorid als Katalysator. Ganz besonders bevorzugt erfolgt die Trimerisierung in Gegenwart von N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-N-(2-hydroxybutyl)-ammoniumhydroxid oder insbesondere N,N,N-Trimethyl-N-benzylammoniumhydroxid als Katalysator.

Ebenfalls geeignete Katalysatoren sind alkylsubstituierte Disilazane wie beispielsweise Hexamethyldisilazan, Heptamethyldisilazan, Diethyl-1,3-tetramethyl-1,1,3,3-disilazan, Divinyl-1,3-tetramethyl-1,1,3,3-disilazan, Hexaethyl-disilazan und Diphenyl-1,3-tetramethyl-1,1,3,3-disilazan. Aus dieser Gruppe ist Hexamethyldisilazan bevorzugt.

In einer bevorzugten Ausführungsform des erfindungsgemäßen, insbesondere wenn es sich bei der Isocyanat-Oligomerisierung um eine Trimerisierung von aliphatischen, cycloaliphatischen oder araliphatischen Isocyanaten handelt, enthält die Waschlösung als Katalysatorgift ein Säurechlorid wie Acetylchlorid, Benzoylchlorid oder Isophthaloyldichlorid, einen Sulfonsäureester wie p-Toluolsulfonsäuremethylester oder p-Toluolsulfonsäureethylester, einen Phosphorsäureester wie Diphenylphosphat, Diethylphosphat, Dibutylphosphat oder Dioctylphosphat, oder eine silylierte Säure wie Methansulfonsäuretrimethylsilylester, Trifluormethansulfonsäuredtrimethylsilylester, Phosphorsäure-tris-(trimethylsilylester) oder Phosphorsäurediethylester-trimethylsilylester. Besonders bevorzugte Katalysatorgifte sind Diphenylphosphat oder Dialkylphosphate wie Diethylphosphat, Dibutylphosphat oder Dioctylphosphat, ganz besonders bevorzugt ist Dibutylphosphat.

In einer weiteren Ausführungsform des erfindungsgemäßen Verfahrens umfasst die Isocyanat-Oligomerisierung eine Oligomerisierung von aliphatischen, cycloaliphatischen oder araliphatischen Isocyanaten unter Bildung von Uretdiongruppen.

Geeignete Ausgangsisocyanate sind dabei beispielsweise 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,2-, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis(isocyanatomethyl)benzol (XDI), 1,3- und 1,4-Bis-(2-isocyanato-prop-2-yl)-benzol (TMXDI), 2,5-Bis(isocyanatomethyl)tetrahydrofuran (TEFUDI), 2,5-Diisocyanato-2,5-dideoxy-1,4:3,6-dianhydrosorbitol (ISODI), 2,5-Diisocyanato-2,5-dideoxy-1,4:3,6-dianhydromannitol (MANDI) und 2,5-Diisocyanato-2,5-dideoxy-1,4:3,6-dianhydroiditol (IDDI) oder Gemische aus zwei oder mehr dieser Diisocyanate.

Besonders geeignete Ausgangsisocyanate sind 1,5-Diisocyanatopentan (PDI), 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, Bis-(isocyanatomethyl)-norbornan, 1,3- und 1,4-Bis(isocyanatomethyl)benzol (XDI) oder Gemische aus zwei oder mehr dieser Diisocyanate.

Ganz besonders geeignete Ausgangsisocyanate sind 1,5-Diisocyanatopentan (PDI), 1,6-Diisocyanatohexan (HDI) und 1-Isocyanato-3,3,5-trimethyl-5-isocyanatomethylcyclohexan (Isophorondiisocyanat, IPDI), am besten geeignete Ausgangsisocyanate sind 1,5-Diisocyanatopentan (PDI) und 1,6-Diisocyanatohexan (HDI).

Geeignete Katalysatoren, in deren Gegenwart die Isocyanat-Oligomerisierung unter Bildung von Uretdion-Gruppen verläuft, sind beispielsweise aminosubstituierte Pyridin-Derivate oder tertiäre Phosphine mit mindestens einem Alkylsubstituenten, vorzugsweise Trialkylphosphine. Bevorzugte tertiäre Phosphine sind Tri-n-butylphosphin und Tri-n-octylphosphin.

In einer bevorzugten Ausführungsform des erfindungsgemäßen Verfahrens, insbesondere wenn es sich bei der Isocyanat-Oligomerisierung um eine Oligomerisierung von aliphatischen, cycloaliphatischen oder araliphatischen Isocyanaten unter Bildung von Uretdiongruppen handelt, enthält die Waschlösung als Katalysatorgift ein Alkylierungs-, Acylierungs- oder Silylierungsmittel, oder ein Gemisch aus zwei oder drei der Vorgenannten, oder sie besteht aus einem der Vorgenannten oder einem Gemisch aus zwei oder drei der Vorgenannten. Besonders geeignet sind Alkylierungsmittel wie beispielsweise Dimethylsulfat oder p-Toluolsulfonsäuremethylester oder Acylierungsmittel wie beispielsweise Säurechloride, insbesondere Benzoylchlorid, oder Säureanhydride. Ganz besonders geeignet sind Alkylierungsmittel, insbesondere Toluolsulfonsäuremethylester.

Das Bereitstellen der Waschflüssigkeit, die ein Katalysatorgift enthält oder daraus besteht, in einer Kontaktzone kann auf verschiedene Arten erfolgen. Die Kontaktzone ist dabei als ein Anlagenteil definiert, in dem es zum Kontakt zwischen dem Abgas und der Waschflüssigkeit kommt. Bevorzugt handelt es sich um eine Tauchung, also z.B. ein mit der Waschflüssigkeit gefülltes U-Rohr, eine Waschflasche oder eine Blasensäule, wobei die Tauchung bevorzugt so ausgestaltet ist, dass das Abgas durch die Flüssigkeit perlt. Mit mehr Aufwand verbunden ist es, die Kontaktzone als Gaswäscher, beispielsweise als Sprühwäscher, als Füllkörper-, Packungs- oder Bodenkolonne, als Strahlwäscher, Wirbelwäscher, Rotationswäscher oder Venturiwäscher auszuführen. Je nach Ausgestaltung der Kontaktzone kann es erforderlich sein, am oder kurz nach dem Ausgang der Kontaktzone einen Tropfenabscheider vorzusehen, der mitgerissene Tröpfchen der Waschflüssigkeit aus dem Abgas abscheiden kann.

Die Waschflüssigkeit kann neben dem Katalysatorgift auch ein nichtwässriges Lösungsmittel enthalten. Vorzugsweise ist dieses nichtwässrige Lösungsmittel silikonfrei und ausgewählt aus der Gruppe bestehend aus Kohlenwasserstoffen, aromatenarmen oder aromatenfreien Mineralölen, synthetischen Ölen und deren Mischungen. Als aromatenarme Mineralöle gelten dabei Mineralöle mit einem Gehalt an aromatischen Kohlenwasserstoffen von weniger als 5 Gew.-%, bevorzugt weniger als 1 Gew.-% und besonders bevorzugt weniger als 0,1 Gew.-%. Bevorzugt weist das nichtwässrige Lösungsmittel bei 20 °C einen Dampfdruck von weniger als 15 mbar, besonders bevorzugt weniger als 2 mbar, ganz besonders bevorzugt weniger als 1 mbar und am meisten bevorzugt weniger als 0,1 mbar auf. Ein geringer Dampfdruck ist vorteilhaft, um die Verluste an Lösungsmittel aus der Waschflüssigkeit zu minimieren. Besonders bevorzugt werden solche Lösungsmittel verwendet, die mit dem Polyisocyanat-Produkt verträglich sind und/oder die auch an anderen Stellen im Prozess verwendet werden. Mit dem Polyioscyanat-Produkt verträgliche Lösungsmittel sind vorzugsweise solche Lösungsmittel, die mit dem Polyisocyanat mischbar sind, die nicht mit den Isocyanatgruppen des Polyisocyanats reagieren und/oder die, sollten Spuren des Lösungsmittels ins Produkt gelangen, keine negativen Auswirkungen auf die Produkteigenschaften haben.

Ein besonders bevorzugtes nichtwässriges Lösungsmittel ist Weißöl. Dieses hat neben einem geringen Dampfdruck weitere Vorteile. Es verharzt nicht und es eignet sich, da es mit den meisten Polyisocyanat-Produkten verträglich ist, auch für andere allgemeine Aufgaben im Produktionsbetrieb, z.B. als Schmier- oder Sperrmedium in Gleitringdichtungen.

In einer besonders bevorzugten Ausführungsform des erfindungsgemäßen Verfahrens besteht deshalb die Waschflüssigkeit aus einem Dialkylphosphat, vorzugsweise Dibutylphosphat, gelöst in Weißöl. Der Gehalt an Dialkylphosphat in dem Weißöl beträgt bevorzugt 5 Gew.-% bis 99 Gew.-%, besonders bevorzugt 20 Gew.-% bis 80 Gew.-% und ganz besonders bevorzugt 30 Gew.-% bis 70 Gew.-%, bezogen auf die Gesamtmasse der Waschflüssigkeit.

Das im Schritt c) des erfindungsgemäßen Verfahrens erhaltene vorbehandelte Abgas neigt überraschend deutlich weniger zur Bildung von Ablagerungen als das im Schritt a) bereitgestellte Abgas. Es kann auch über weite Strecken problemlos in Rohrleitungen transportiert werden. Das vorbehandelte Abgas kann aufgefangen und einer Nachbehandlung zugeführt werden. Gegebenenfalls können mitgerissene Tröpfchen der Waschflüssigkeit hierbei mit Hilfe eines Tröpfchenabscheiders abgeschieden werden.

Der Fachperson sind zahlreiche Methoden der Abgasnachbehandlung bekannt, aus denen er entsprechend der Art und Menge der Beladung des Abgases eine geeignete Methode auswählen kann. Vorzugsweise handelt es sich dabei um eine Methode ausgewählt aus der Gruppe bestehend aus thermischer Abgasreinigung, Adsorption und katalytischer Verbrennung. Besonders bevorzugt ist die thermische Abgasreinigung. Eine thermische Abgasreinigung ist häufig ebenfalls mit einer Tauchung ausgerüstet, die vor allem als Flammenrückschlagsicherung dient. Diese ist nicht mit der erfindungsgemäßen Kontaktzone zu verwechseln. Sie wird in der Regel mit Wasser betrieben und befindet sich in unmittelbarer Nähe des Brenners.

Ein weiterer Gegenstand der Erfindung ist die Verwendung einer Waschflüssigkeit, die ein Katalysatorgift für einen Katalysator K oder für ein katalytisch aktives Fragment des Katalysators K enthält oder daraus besteht, zur Vorbehandlung von Abgasen aus einer durch den Katalysator K katalysierten Isocyanat-Oligomerisierung in einem Abgassystem, insbesondere zur Reduktion von Ablagerungen im Abgassystem, wobei das Katalysatorgift geeignet ist, den Katalysator K oder ein katalytisch aktives Fragment des Katalysators K zu hemmen oder zu deaktivieren.

Bevorzugt handelt es sich bei der Waschflüssigkeit um eine Lösung von Dialkylphosphat, besonders bevorzugt Dibutylphosphat, in Weißöl.

Ein weiterer Gegenstand der Erfindung ist eine Vorrichtung zur Isocyanat-Oligomerisierung, umfassend
- wenigstens einen Reaktor, der zur Oligomerisierung eines Isocyanats eingerichtet ist,
- wenigstens eine Kontaktzone, die über eine erste Rohrleitung mit einer Länge L1 mit dem wenigstens einen Reaktor verbunden ist und die dazu eingerichtet ist, Abgas aus dem Reaktor mit einer Waschlösung zu kontaktieren, um ein vorbehandeltes Abgas zu erhalten, und
- wenigstens eine Einrichtung zur Abgasnachbehandlung, die über eine zweite Rohrleitung mit der Länge L2 mit der Kontaktzone verbunden ist und die dazu eingerichtet ist, in der Kontaktzone vorbehandeltes nachzubehandeln,
wobei das Längenverhältnis L1/L2 der beiden Rohrleitungen ≤1,0, bevorzugt ≤0,5, besonders bevorzugt ≤0,2 und ganz besonders bevorzugt ≤0,1 ist.

Geeignete Reaktoren zur Isocyanat-Oligomerisierung sind der Fachperson bekannt. Es kann sich beispielsweise um Rührkesselreaktoren oder Rohrreaktoren handeln. In der Vorrichtung zur Isocyanat-Oligomerisierung können mehrere solcher Reaktoren, auch unterschiedlichen Typs, kombiniert werden. Für eine diskontinuierliche Isocyanat-Oligomerisierung werden bevorzugt Rührkesselreaktoren eingesetzt. Für die kontinuierliche Herstellung von Isocyanat-Oligomeren bieten sich beispielsweise Rohrreaktoren oder Kaskaden von Rührkesselreaktoren, vorzugsweise Kaskaden von Rührkesselreaktoren an.

Erfindungsgemäß verfügen die Reaktoren oder Kaskaden von Reaktoren über wenigstens einen Auslass für einen Abgasstrom. Dieser Auslass ist über eine erste Rohrleitung mit einer Kontaktzone verbunden, die dazu eingerichtet ist, das Abgas aus dem Reaktor mit einer Waschflüssigkeit zu kontaktieren. Bei der Kontaktzone kann es sich beispielsweise um einen Gaswäscher oder eine Tauchung handeln. Als Gaswäscher werden vorliegend Apparate bezeichnet, in denen die Flüssigkeit so durch den Apparat gefördert wird, dass eine große spezifische Oberfläche für den Kontakt mit dem Abgas entsteht, also beispielsweise Sprühwäscher, Füllkörper-, Packungs- oder Bodenkolonnen, Strahlwäscher, Rotationswäscher oder Venturiwäscher. Bevorzugte Gaswäscher sind Sprühwäscher, Füllkörperkolonnen oder Packungskolonnen, besonders bevorzugte Gaswäscher sind Sprühwäscher. Als Tauchung werden vorliegend Vorrichtungen bezeichnet, bei denen die Waschflüssigkeit an sich nicht gefördert wird, sondern das Gas, vorzugsweise in Form von Blasen, durch die Waschflüssigkeit perlt. Hierzu gehören beispielsweise Blasensäulen, Waschflaschen oder Siphons. In der einfachsten und bevorzugten Ausgestaltung der erfindungsgemäßen Vorrichtung ist die Kontaktzone ein mit Waschflüssigkeit gefülltes U-Rohr, durch das das Abgas geleitet wird.

Zur Kontrolle des Füllstands an Waschflüssigkeit können Standmessungen oder Schaugläser an geeigneter Stelle der Kontaktzone installiert sein. Vorzugsweise verfügt die Kontaktzone über eine Einrichtung zur Entnahme von Waschflüssigkeit und eine Einrichtung zur Zugabe von Waschflüssigkeit. Dies ermöglicht es, Wachflüssigkeit diskontinuierlich oder kontinuierlich, bevorzugt diskontinuierlich, zumindest teilweise zu ersetzen, um einen Verbrauch an Katalysatorgift in der Waschflüssigkeit zu kompensieren und eine zu starke Anreicherung von Verunreinigungen aus dem Abgas zu verhindern. Entnommene Waschflüssigkeit kann entsorgt, vorzugsweise verbrannt, werden oder für eine weitere Verwendung, beispielsweise durch Filtration, Extraktion, Destillation und/oder Anreicherung, aufgearbeitet werden.

Der Kontaktzone schließt sich stromabwärts eine zweite Rohrleitung an, die dazu eingerichtet ist, dass das in der Kontaktzone vorbehandelte Abgas durch sie zu einer Abgasnachbehandlung befördert wird. Natürlich können dieser zweiten Rohrleitung weitere Apparate wie beispielsweise Ventile, Sensoren, Rückschlagklappen, Verdichter oder Wärmetauscher zugeordnet sein. Bei Bedarf kann die zweite Rohrleitung über eine Isolierung und/oder eine Begleitbeheizung verfügen. Sie mündet in einer Einrichtung zur Abgasnachbehandlung. Dabei handelt es sich vorzugsweise um eine Nachbehandlung ausgewählt aus der Gruppe bestehend aus thermischer Abgasreinigung, Adsorption und katalytischer Verbrennung. Besonders bevorzugt ist die thermische Abgasreinigung.

In einer bevorzugten Ausführungsform umfasst die Einrichtung zur Abgasnachbehandlung eine Tauchung, die dazu eingerichtet ist, das Abgas durch eine zweite Waschflüssigkeit zu leiten, und so beispielsweise als Flammenrückschlagsicherung dient.

Durch das erfindungsgemäße Verfahren kommt es dank der Vorbehandlung des Abgasstroms zu wesentlich weniger Ablagerungen im Abgassystem der Vorrichtung zur Isocyanat-Oligomerisierung. Es ist zweckmäßig, die Kontaktzone möglichst nah an der Abgasquelle, also an dem Reaktor oder den Reaktoren zu positionieren, da sich in dem stromaufwärts der Kontaktzone liegenden Abschnitt des Abgassystems, vorliegend also in der ersten Rohrleitung, Ablagerungen auch mit Hilfe der vorliegenden Erfindung nicht vermeiden lassen. Hingegen kann die zweite Rohrleitung zur Einrichtung zur Abgasnachbehandlung, bei der es sich regelmäßig um eine zentrale Einrichtung handelt, problemlos länger ausgeführt sein. In diesem stromabwärts der Kontaktzone gelegenen Abschnitt des Rohrleitungssystems werden Ablagerungen durch die Vorbehandlung des Abgases effektiv vermieden. Dies ermöglicht eine optimale Einbindung der Abgasnachbehandlung in das Gesamtkonzept der Vorrichtung zur Isocyanat-Oligomerisierung bzw. darüber hinaus in einen Produktionsverbund.

Aus diesen Sachverhalten ergibt sich ein vorteilhaftes Längenverhältnis L1/L2 der ersten zur zweiten Rohrleitung von ≤1,0, bevorzugt ≤0,5, besonders bevorzugt ≤0,2 und ganz besonders bevorzugt ≤0,1.

Die Längen der Rohrleitungen sind jeweils als maximale Länge der Rohrleitung von einer Abgasquelle (erste Rohrleitung mit Länge L1) zur Kontaktzone bzw. von der Kontaktzone zur Einrichtung zur Abgasnachbehandlung (zweite Rohrleitung mit Länge L2) zu verstehen. Das heißt, dass z.B. bei einer Vorrichtung zur Isocyanat-Oligomerisierung, bei der mehrere Reaktoren parallel oder in Reihe betrieben werden, die Länge der längsten Rohrleitung zu einem der Reaktoren maßgeblich ist. Gleiches gilt auch, wenn die Abgase zunächst in einer Sammelleitung gesammelt und dann zur Kontaktzone geleitet werden. In diesem Fall wird die längste direkte Wegstrecke von einem Reaktor zur Kontaktzone als Länge L1 herangezogen.

Wie zuvor ausgeführt, ist es zweckmäßig, die Vorrichtung derart zu gestalten, dass sich die Kontaktzone möglichst nah an der Abgasquelle befindet und L1 möglichst klein ist. Darüber hinaus können weitere Maßnahmen getroffen werden, einen möglichst ungestörten Betrieb mit nur wenigen und/oder kurzen Unterbrechungen für Reinigungsarbeiten zu gewährleisten. So kann beispielsweise die stromaufwärts gelegene erste Rohrleitung mit einem größeren Innendurchmesser ausgelegt werden als er im sauberen Zustand der Rohrleitung benötigt würde. Dies ermöglicht trotz Ablagerungen einen längeren Betrieb und ist, da es sich nur um ein kleines Teilstück des Abgassystems handelt, mit vertretbaren Kosten verbunden. Außerdem kann im Layout der Anlage darauf geachtet werden, diesen Teil des Abgassystems möglichst reinigungsfreundlich, also mit nur wenig Bögen, Verjüngungen, oder anderen Einbauten zu gestalten. Eine weitere Möglichkeit, Wartungsstillstände kurz zu halten, besteht darin, für die weiterhin für Ablagerungen anfälligen Rohrleitungsabschnitte entsprechende Passstücke vorzuhalten, die bei Bedarf rasch ausgewechselt werden können oder diese Leitungsstücke gleich redundant auszulegen. Beides ist wiederum aufgrund der erfindungsgemäß kurzen Länge der ersten Rohrleitung zu vertretbaren Kosten möglich.

Im Folgenden soll die Erfindung anhand von Ausführungsbeispielen erläutert werden, ohne dass diese den Schutzbereich, der durch die Ansprüche definiert ist, einschränken.

### Beispiele

### Beispiel 1 (Vergleichsbeispiel):

Ausgehend von Hexamethylendiisocyanat (HDI) wurde über längere Zeit wiederholt ein isocyanuratgruppenhaltiges Polyisocyanat in einer Anlage zur Isocyanat-Oligomerisierung produziert. Die Reaktion erfolgte bei 60 - 80 °C unter Einleitung von Stickstoff und unter Verwendung einer Lösung von N,N,N-Trimethyl-N-benzylammoniumhydroxid in Methanol und 2-Ethylhexanol als Katalysator. Bei Erreichen des Ziel-NCO-Gehalts wurde die Reaktion jeweils durch Zugabe von Dibutylphosphat gestoppt und die Reaktionsmischung durch Destillation von überschüssigem HDI und anderen leichtsiedenden Nebenkomponenten befreit, um das gewünschte Produkt zu erhalten.

Das Reaktionsabgas wurde über ein Rohrleitungssystem einer thermischen Abgasreinigung zugeführt. Etwa zweimal pro Jahr wurde aufgrund von Ablagerungen in dem Rohrleitungssystem ein Produktionsstillstand erforderlich, um das Rohrleitungssystem zu reinigen.

### Beispiel 2:

Die im Beispiel 1 genutzte Anlage wurde wie folgt modifiziert: Nahe dem Reaktor wurde das Abgas-Rohrleitungssystem um eine Tauchung ergänzt. Diese war als U-förmiger Siphon gestaltet und verfügte über mehrere Schaugläser zur Kontrolle des Flüssigkeitsstands in diesem Siphon. Außerdem war am tiefsten Punkt eine Entnahmestelle für Flüssigkeit installiert und etwas oberhalb davon verfügte der Siphon über eine Zugabestelle für Flüssigkeit. Über diese wurde eine 50%ige Lösung aus Dibutylphosphat in Weißöl als Waschflüssigkeit in den Siphon eingebracht, so dass sich eine Kontaktzone mit einem Waschflüssigkeitsstand ausbildete und das Abgas nun nach Verlassen des Reaktors zunächst durch diese Waschflüssigkeit perlen musste. Die Rohrleitungslänge vom Auslass des Reaktors bis zur Kontaktzone betrug ca. 2 m. Stromabwärts war der neue Siphon über das bestehende Rohrleitungssystem wie gehabt mit der thermischen Abgasreinigung verbunden. Die Länge der Rohrleitung betrug hier ca. 25 m. In der so modifizierten Anlage wurde die Reaktion wie im Beispiel 1 beschrieben durchgeführt, und es zeigte sich, dass Ablagerungen mit der üblichen Frequenz nun lediglich in dem kurzen Rohrleitungssegment (erste Rohrleitung) zwischen Reaktor und Kontaktzone auftraten. Die Reinigung dieses kurzen Abschnitts konnte schnell und kostengünstig durchgeführt werden, die längere Rohrleitung bis zur thermischen Abgasreinigung (zweite Rohrleitung) benötigte über einen Zeitraum von mehr als zwei Jahren keine Reinigung.

### Beispiel 3:

Ausgehend von Hexamethylendiisocyanat wurde ein uretdiongruppenhaltiges Polyisocyanat produziert. Die Produktionsanlage und Verfahrensführung entsprach mit Ausnahme der folgenden Merkmale der in Beispiel 2 beschriebenen Produktionsanlage und Verfahrensführung:
- Die Reaktion zur Bildung der Uretdiongruppen wurde in diesem Fall durch Zugabe von Tri-n-butylphosphin katalysiert, und
- nach Erreichen des gewünschten Umsetzungsgrades durch Zugabe von Toluolsulfonsäuremethylester sowie einer kurzen Erhitzung der Reaktionsmischung gestoppt.
- Die Abgastauchung war in diesem Fall mit Toluolsulfonsäuremethylester befüllt, durch den das Abgas aus dem Reaktor perlte.

Es zeigten sich in der Rohrleitung zwischen Reaktor und Kontaktzone (erste Rohrleitung) Ablagerungen, die ca. ein- bis zweimal pro Jahr eine Reinigung dieses Rohrleitungsabschnitts erforderlich machten, während in der stromabwärts der Kontaktzone gelegenen Rohrleitung bis zur thermischen Abgasreinigung (zweite Rohrleitung) über einen Zeitraum von mehr als zwei Jahren keine Reinigung erforderlich war.

### Beispiel 4:

Ausgehend von Pentamethylendiisocyanat (PDI) wurde in einer Laborapparatur aus Glas über längere Zeit wiederholt ein isocyanuratgruppenhaltiges Polyisocyanat hergestellt. Die Reaktion erfolgte bei 60 - 80 °C unter Einleitung von Stickstoff und unter Verwendung einer Lösung von N,N,N-Trimethyl-N-benzylammoniumhydroxid in Methanol und 2-Ethylhexanol als Katalysator. Bei Erreichen des Ziel-NCO-Gehalts wurde die Reaktion jeweils durch Zugabe von Dibutylphosphat gestoppt und die Reaktionsmischung durch Destillation von überschüssigem PDI und anderen leichtsiedenden Nebenkomponenten befreit, um das gewünschte Produkt zu erhalten.

Das Reaktionsabgas wurde durch ein U-Rohr abgeleitet, in dem sich eine 45%ige Lösung von Dibutylphosphat in Weißöl befand. Nach einigen Monaten hatten sich in der Zuleitung zum U-Rohr feste Ablagerungen gebildet, wohingegen die stromabwärts gelegenen Ableitung frei von Ablagerungen blieb.

## Patentansprüche

1. Verfahren zur Behandlung von Abgas aus einer durch einen Katalysator K katalysierten Isocyanat-Oligomerisierung, umfassend die Schritte:
a) Bereitstellen des Abgases,
b) Bereitstellen einer Waschflüssigkeit, die ein Katalysatorgift für den Katalysator K oder für ein katalytisch aktives Fragment des Katalysators K enthält oder daraus besteht, in einer Kontaktzone,
c) Vorbehandeln des Abgases aus Schritt a) durch Kontaktieren des Abgases mit der Waschflüssigkeit in der Kontaktzone, um ein vorbehandeltes Abgas zu erhalten, und
d) optional Auffangen und Nachbehandeln des vorbehandelten Abgases aus Schritt c).

2. Verfahren nach Anspruch 1, wobei die Isocyanat-Oligomerisierung eine Trimerisierung von aliphatischen, cycloaliphatischen oder araliphatischen Isocyanaten umfasst.

3. Verfahren gemäß Anspruch 2, wobei der Katalysator K eine tetrasubstituierte Ammonium- und/oder Phosphoniumverbindung und ein Hydroxid, Carboxylat und/oder Carbonat als Gegenion umfasst oder daraus besteht oder wobei der Katalysator K ein alkylsubstituiertes Disilazan umfasst oder daraus besteht.

4. Verfahren gemäß einem der Ansprüche 2 oder 3, wobei als Katalysatorgift ein Säurechlorid, ein Phosphorsäureester, einen Sulfonsäureester oder eine silylierte Säure eingesetzt wird.

5. Verfahren gemäß Anspruch 1, wobei die Isocyanat-Oligomerisierung eine Oligomerisierung von aliphatischen, cycloaliphatischen oder araliphatischen Isocyanaten unter Bildung von Uretdiongruppen umfasst.

6. Verfahren gemäß Anspruch 5, wobei der Katalysator K ein aminosubstituiertes PyridinDerivat oder ein tertiäres Phosphin mit mindestens einem Alkylsubstituenten, vorzugsweise ein Trialkylphosphin, umfasst oder daraus besteht.

7. Verfahren gemäß einem der Ansprüche 5 oder 6, wobei als Katalysatorgift ein Alkylierungs-, Acylierungs- oder Silylierungsmittel eingesetzt wird.

8. Verfahren gemäß einem der Ansprüche 1 bis 7, **dadurch gekennzeichnet, dass** die Waschflüssigkeit neben dem Katalysatorgift ein nichtwässriges Lösungsmittel enthält.

9. Verfahren gemäß Anspruch 8, **dadurch gekennzeichnet, dass** das nichtwässrige Lösungsmittel wenigstens eines aus silikonfreien Kohlenwasserstoffen, aromatenarmen oder aromatenfreien Mineralölen, synthetischen Ölen und deren Mischungen umfasst oder daraus besteht.

10. Verfahren gemäß einem der Ansprüche 1 bis 9, wobei d) das Nachbehandeln nicht optional ist und eine thermische Abgasreinigung, eine Adsorption oder eine katalytische Verbrennung umfasst oder daraus besteht.

11. Verwendung einer Waschflüssigkeit, die ein Katalysatorgift für einen Katalysator K oder für ein katalytisch aktives Fragment des Katalysators K enthält oder daraus besteht, zur Vorbehandlung von Abgasen aus einer durch den Katalysator K katalysierten Isocyanat-Oligomerisierung in einem Abgassystem, insbesondere zur Reduktion von Ablagerungen im Abgassystem, wobei das Katalysatorgift geeignet ist, den Katalysator K oder ein katalytisch aktives Fragment des Katalysators K zu hemmen oder zu deaktivieren.

12. Verwendung gemäß Anspruch 11, **dadurch gekennzeichnet, dass** es sich bei der Waschflüssigkeit um eine Lösung von Dialkylphosphat, bevorzugt Dibutylphosphat, in Weißöl handelt.

13. Vorrichtung zur Isocyanat-Oligomerisierung, umfassend
a) wenigstens einen Reaktor, der zur Oligomerisierung eines Isocyanats eingerichtet ist,
b) wenigstens eine Kontaktzone, die über eine erste Rohrleitung mit einer Länge L1 mit dem wenigstens einen Reaktor verbunden ist und die dazu eingerichtet ist, Abgas aus dem Reaktor mit einer Waschlösung zu kontaktieren, um ein vorbehandeltes Abgas zu erhalten, und
c) wenigstens eine Einrichtung zur Abgasnachbehandlung, die über eine zweite Rohrleitung mit der Länge L2 mit der Kontaktzone verbunden ist und die dazu eingerichtet ist, in der Kontaktzone vorbehandeltes Abgas nachzubehandeln,
d) wobei das Verhältnis L1/L2 ≤1,0, bevorzugt ≤0,5, besonders bevorzugt ≤0,2 und ganz besonders bevorzugt ≤0,1 ist.

14. Vorrichtung nach Anspruch 13, wobei der wenigstens eine Reaktor einen Rührkesselreaktor, einen Rohrreaktor oder eine Kombination der Vorgenannten umfasst.

15. Vorrichtung nach Anspruch 13 oder 14, wobei die Abgasnachbehandlung eine thermische Abgasreinigung, Adsorption, katalytische Verbrennung oder Kombination der Vorgenannten umfasst oder daraus besteht, wobei die Abgasnachbehandlung bevorzugt eine thermische Abgasreinigung umfasst, wobei die Einrichtung zur Abgasnachbehandlung besonders bevorzugt eine mit einer Tauchung ausgerüstete thermische Abgasreinigung umfasst.
